Europäisches Patentamt

European Patent Office

Office européen des brevets

(19)

(11) **EP 1 616 994 A1**

(12) **EUROPEAN PATENT APPLICATION**
published in accordance with Art. 158(3) EPC

(43) Date of publication:
**18.01.2006 Bulletin 2006/03**

(51) Int Cl.:
**D21C 5/02** (1968.09)

(21) Application number: **04724401.7**

(22) Date of filing: **30.03.2004**

(86) International application number:
**PCT/JP2004/004531**

(87) International publication number:
**WO 2004/094718 (04.11.2004 Gazette 2004/45)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **23.04.2003 JP 2003117807**

(71) Applicant: **Lion Corporation
Tokyo 130-8644 (JP)**

(72) Inventors:
 • **KAKUI, Toshio,
 LION CORPORATION
 Tokyo 1308644 (JP)**
 • **YOSHIDA, Kousuke,
 LION CORPORATION
 Tokyo 1308644 (JP)**

 • **YAMASAKI, Atsushi,
 LION CORPORATION
 Tokyo 1308644 (JP)**
 • **KANETANI, Akinori,
 LION CORPORATION
 Tokyo 1308644 (JP)**
 • **SAKAI, Tetsuya,
 LION CORPORATION
 Tokyo 1308644 (JP)**
 • **TAKEI, Mitsuhiko,
 LION CORPORATION
 Tokyo 1308644 (JP)**

(74) Representative: **Stuart, Ian Alexander et al
MEWBURN ELLIS
York House
23 Kingsway
London WC2B 6HP (GB)**

(54) **DEINKING AGENT AND DEINKING AGENT COMPOSITION**

(57)    A deinking agent which comprises a compound having a $C_{7-23}$ aliphatic hydrocarbon group, an oxyethylene group, and an oxypropylene group and/or oxybutylene group and having a degree of biodegradation of 60% or more and an average molecular weight of 1,500 or less. This deinking agent has satisfactory biodegradability and is reduced in the burden to be imposed on the environment. It provides satisfactory handleability because a moderate froth amount is maintained during the treatment. With the deinking agent, a high-quality regenerated pulp having a high whiteness and a low residual ink content can be obtained.

**EP 1 616 994 A1**

**Description**

TECHNICAL FIELD

This invention relates to a deinking agent and deinking agent composition, and described in further detail, relates to a deinking agent and deinking agent composition suitably usable, for example, upon obtaining regenerated pulp from printed waste paper such as newspapers and magazines.

BACKGROUND ART

It has been conducted for many years to regenerate pulp from printed waste paper such as newspapers and magazines and to reuse it as a paper-making raw material. In recent years, from the standpoint of effective utilization of natural resources and protection of the environment, the reuse of printed waste paper is finding an increasing importance, and further, the application field of regenerated pulp is expanding.

Upon reusing printed waste paper, the waste paper is generally treated by mixing it with an alkaline agent such as caustic soda, sodium carbonate or sodium silicate, a bleaching agent such as hydrogen peroxide or sodium hypochlorite, and a chelating agent such as EDTA or DTPA, and then adding, as a deinking agent, one or more of anionic surfactants, such as alkylbenzenesulfonates, α-olefinsulfonates, higher alcohol sulfate esters and dialkylsulfosuccinates, and nonionic surfactants such as ethylene oxide adducts of higher alcohols, alkylphenols and fatty acids.

In recent years, there is an outstanding demand for deinking agents having good biodegradability from the viewpoint of protection of the environment. However, conventional deinking agents are insufficient when considered from the standpoint of biodegradability, although they may be superb in deinking performance such as brightness and residual ink content.

Japanese Patent Laid-open No. Hei 11-323754 contains a description to the effect that with a view to lessening the above-mentioned drawback, the ethoxylates of certain particular branched secondary alcohols are used as deinking agents and show good biodegradability. Such compounds, however, involve a fundamental problem that the deinking agents are insufficient in deinking performance itself.

Turning to deinking treatment, on the other hand, processing machines such as kneaders, refiners and dispersers have been improved to improve the efficiency of deinking. As a consequence, there is a tendency that exfoliated ink is micronized.

However, the above-mentioned deinking agents of the anionic surfactant type are insufficient in the ability to capture ink exfoliated upon flotation, so that it has been extremely difficult to obtain high-quality regenerated pulp of high brightness and low residual ink content.

With a view to overcoming this problem, a variety of deinking agents of the fatty acid-alkylene oxide adduct type have been proposed in recent years (Japanese Patent Laid-open No. Hei 6-57667, etc.).

Depending on the situation of use, however, these deinking agents of the fatty acid-alkylene oxide adduct type may undergo solidification or gelling to result in substantially-deteriorated handling in some instances, although they are satisfactory in deinking performance such as brightness and residual ink content.

Further, these deinking agents each contains an ester bond derived from a carboxyl group in the fatty acid. Depending on the storage conditions, a hydrolytic reaction may proceed, leading to deteriorations in tone and smell, and in some instances, also leading to reductions in deinking effects.

DISCLOSURE OF INVENTION

With such circumstances in view, the present invention has as a first object thereof the provision of a deinking agent, which has good biodegradability and gives only a small pollutant load on the environment, serves to maintain an appropriate amount of froth during treatment and therefore, assures good handling, and further, can obtain high-quality regenerated pulp of high brightness and low residual ink content.

The present invention also has as a second object thereof the provision of a deinking agent composition, which is excellent in stability over days, serves to maintain an appropriate amount of froth during treatment and therefore, assures good handling, and further, can obtain high-quality regenerated pulp of high brightness and low residual ink content.

The present inventors have proceeded with an extensive investigation to achieve the above-described objects. As a result, it has been found that a deinking agent which includes a compound having a predetermined average molecular weight and containing aliphatic hydrocarbon groups having from 7 to 23 carbon atoms, oxyethylene groups, and oxypropylene groups and/or oxybutylene groups is equipped with excellent biodegradability and superb deinking performance in combination and also that a deinking agent composition prepared by mixing a deinking agent, which contains a particular fatty acid polyoxyalkylene or fatty acid polyoxyalkylene alkyl ether, and water in predetermined proportions is equipped with excellent stability over days, superb deinking performance and outstanding handling in combination, leading to the completion of the present invention.

Described specifically, the present invention provides:

1. A deinking agent comprising a compound having aliphatic hydrocarbon groups having from 7 to 23 carbon atoms, oxyethylene groups, and oxypropylene groups and/or oxybutylene groups, a degree of biodegradation of 60% or more, and an average molecular weight of 1,500 or less.

2. The deinking agent as described above in paragraph 1, wherein a number of moles of the oxyethylene groups is equal to or greater than a total number of moles of the oxypropylene groups and oxybutylene groups.

3. The deinking agent as described above in paragraph 1 or 2, wherein the compound is represented by the following formula (1):

$$R^1COO(AO)_nR^2 \qquad (1)$$

wherein $R^1$ represents an alkyl group or alkenyl group having from 7 to 21 carbon atoms, $R^2$ represents a hydrogen atom or an alkyl group or alkenyl group having from 1 to 6 carbon atoms, AO represents an oxyalkylene group having from 2 to 4 carbon atoms, n stands for from 3 to 20, and the oxyalkylene group comprises oxyethylene group and oxypropylene group and/or oxybutylene group.

4. A deinking agent composition including from 75 to 95 wt% of a compound represented by the following formula (2) and from 5 to 25 wt% of water, and having a pH of from 4 to 9:

$$R^3COO(BO)_mR^4 \qquad (2)$$

wherein $R^3$ represents an alkyl group or alkenyl group having from 7 to 21 carbon atoms, $R^4$ represents a hydrogen atom or an alkyl group or alkenyl group having from 1 to 6 carbon atoms, BO represents an oxyalkylene group having from 2 to 4 carbon atoms, and m stands for from 3 to 20.

The present invention can provide a deinking agent and deinking agent composition, which are excellent in biodegradability and therefore, give only a small pollutant load on the environment, serve to maintain an appropriate amount of froth and is excellent in operability during deinking treatment of printed waste paper such as newspapers, and can afford high-quality regenerated pulp of high brightness and low residual ink content.

The deinking composition according to the present invention is excellent in deinking performance, is low in flammability and hence, superb in safety, assures excellent handling although it can be formed into a solution of high concentration, is excellent in storage stability over days without hydrolysis, and therefore, develops neither separation nor precipitation in the solution.

BEST MODES FOR CARRYING OUT THE INVENTION

The present invention will hereinafter be described in further detail.

The deinking agent according to the present invention is characterized in that it comprises a compound having aliphatic hydrocarbon groups having from 7 to 23 carbon atoms, oxyethylene groups, and oxypropylene groups and/or oxybutylene groups, a degree of biodegradation of 60% or more, and an average molecular weight of 1,500 or less. It is equipped with good deinking performance, and owing to its excellent biodegradability, gives only a small pollutant load on the environment.

The term "the degree of biodegradation" as used herein means a value as determined by following the MITI testing method (OECD Test Guideline 301C), and a substance having a degree of biodegradation of 60% or greater and leaving no biodegradation product behind is determined to have good biodegradability.

The deinking agent is discharged into a river together with other chemicals employed in a deinking treatment step after subjected to treatment of the wastewater such as coagulationsedimentation treatment and microbiological treatment subsequent to its use. If the biodegradability of the deinking agent is insufficient, a longer time is required for the microbiological treatment or the like upon treatment of the wastewater, resulting in a higher production cost for regenerated waste paper. The degree of biodegradation is, therefore, required to be 60% or greater, with 80% or greater being preferred.

The term "average molecular weight" as used herein is a value calculated from a measured saponification value or hydroxyl number. A compound the average molecular weight of which is higher than 1,500 has a potential problem that it shows very low biodegradability. The more preferred average molecular weight is 1,200 or lower, notably 1,000 or lower. Its lower limit can generally be 600 or so, although no particular limitation is imposed thereon.

In the present invention, the aliphatic hydrocarbon groups having from 7 to 23 carbon atoms are required to retain affinity with ink. If these aliphatic hydrocarbon groups have less than 7 carbon atoms, the affinity with ink is lowered so that the capture of the ink is rendered difficult. As a result, no good deinking performance may be exhibited. If these hydrocarbon groups have more than 23 carbon atoms, on the other hand, the hydrophobicity is so high that the coagulation of the deinking agent itself proceeds, resulting in a potential problem that the deinking agent may not act sufficiently on the ink on wastepaper.

The oxyalkylene groups such as oxyethylene groups are relevant to froth characteristics. Among these, oxyethylene groups serve to froth up, while oxypropylene groups and oxybutylene groups serve to inhibit frothing or to eliminate froth.

To assure an appropriate amount of froth required for deinking treatment, the number of moles of oxyethylene groups can preferably be equal to or greater than the total number of moles of oxypropylene groups and/or oxybutylene groups. Outside this range, a problem may arise in that an appropriate amount of froth may not be assured and the operation may be troubled.

As such compounds, those obtained by adding ethylene oxide and propylene oxide and/or butylene oxide to alcohols, fatty acids, amines or amides having from 7 to 23 carbon atoms can be mentioned.

In this case, the number of moles of added ethylene oxide may be from 2 to 20 moles, with from 5 to 18 moles being preferred. The number of moles of added propylene oxide and/or butylene oxide may be from 1 to 10 moles in total, with from 1 to 5 moles in total being preferred. The number of moles of added ethylene oxide may preferably be equal to or greater than the total number of moles of added propylene oxide and/or butylene oxide. More preferably, the number of moles of added ethylene oxide/the total number of moles of added propylene oxide and/or butylene oxide may range from 2/1 to 10/1.

Particularly preferred as the compound can be a compound represented by the following formula (1):

$$R^1COO(AO)_nR^2 \qquad (1)$$

wherein $R^1$ represents an alkyl group or alkenyl group having from 7 to 21 carbon atoms, $R^2$ represents a hydrogen atom or an alkyl group or alkenyl group having from 1 to 6 carbon atoms, AO represents an oxyalkylene group having from 2 to 4 carbon atoms, n stands for from 3 to 20, and the oxyalkylene group comprises oxyethylene group and oxypropylene group and/or oxybutylene group.

As the alkyl or alkenyl group having from 7 to 21 carbon atoms, it is possible to use an alkyl group such as n-heptyl, n-undecyl, n-tridecyl, n-pentadecyl, n-heptadecyl, isoheptyl, isoundecyl or isoheptadecyl, or an alkenyl group corresponding to such an alkyl group.

As the alkyl or alkenyl group having from 1 to 6 carbon atoms, it is possible to use an alkyl group such as methyl, ethyl, n-propyl, i-propyl, n-butyl, s-butyl, t-butyl, n-pentyl or n-hexyl, or an alkenyl group corresponding to such an alkyl group other than methyl.

An alkyl or alkenyl group having more than 21 carbon atoms as $R^1$ and/or an alkyl or alkenyl group having more than 6 carbon atoms as $R^2$ in the compound of the formula (1) may lead to a reduction in the amount of froth during flotation, resulting in a potential problem that the operation may be troubled. An alkyl group or alkenyl group having smaller than 7 carbon atoms as $R^1$, on the other hand, may involve a potential problem that the ink capturing force may not be exhibited to any sufficient extent.

Further, a number (n) of moles of added oxyalkylene groups AO greater than 20 involves a potential problem that sufficient biodegradability may not be exhibited. A number (n) of moles of added oxyalkylene groups AO smaller than 3 may not provide sufficient deinking performance.

The oxyalkylene groups AO in the compound of formula (1) are composed including oxyethylene groups, and also, oxypropylene groups and/or oxybutylene groups. The total number (n) of added oxyalkylene groups can be from 3 to 20 moles. In this case, it is also preferred that the number of moles of added oxyethylene groups, the total number of moles of added oxypropylene groups and/or oxypropylene groups, and each number of their moles satisfy the above-mentioned values and relation.

The deinking agent composition according to the present invention is characterized in that it inlcudes from 75 to 95 wt% of a compound represented by the following formula (2) and from 5 to 25 wt% of water and has a pH of from 4 to 9, is excellent in stability over days, deinking performance and handling, and depending on the type of an oxyalkylene group BO, and like the compound of the formula (1), is also excellent in biodegradability:

$$R^3COO(BO)_mR^4 \qquad (2)$$

wherein $R^3$ represents an alkyl group or alkenyl group having from 7 to 21 carbon atoms, $R^4$ represents a hydrogen atom or an alkyl group or alkenyl group having from 1 to 6 carbon atoms, BO represents an oxyalkylene group having from 2 to 4 carbon atoms, and m stands for from 3 to 20.

The alkyl or alkenyl group having from 7 to 21 carbon atoms and the alkyl or alkenyl group having from 1 to 6 carbon atoms in the compound of the formula (2) are similar to those mentioned with respect to the compound of the formula (1).

In this case, an alkyl or alkenyl group having more than 21 carbon atoms as $R^3$ and/or an alkyl or alkenyl group having more than 6 carbon atoms as $R^4$ may also lead to a reduction in the amount of froth during flotation, resulting in a highly possible problem that the operation may be troubled.

An alkyl group or alkenyl group having smaller than 7 carbon atoms as $R^3$ may involve a highly possible problem that the ink capturing force may be not exhibited to any sufficient extent.

As the deinking agent composition has a potential problem that it may undergo gelling or the like to lower the stability over days, $R^4$ may preferably be an alkyl group having 1 to 3 carbon atoms.

A number (m) of moles of added oxyalkylene groups BO greater than 20 may lead to deteriorations in solution properties and hence to a reduction in handling. A number (m) of moles of added oxyalkylene groups BO smaller than 3 may not achieve sufficient deinking performance, and moreover, may not assure an appropriate amount of froth and may trouble the operation.

No particular limitation is imposed on the oxyalkylene groups BO having from 2 to 4 carbon atoms, and oxyethylene groups, oxypropylene groups and oxybutylene groups can be selectively used as desired, for example, can be used singly or can be used at desired ratios in combination. From the standpoint of assuring an appropriate amount of froth required for deinking treatment, however, oxyethylene groups alone or a combination of oxyethylene groups and oxypropylene groups is preferred, with a combination of oxyethylene groups and oxypropylene groups being particularly preferred.

In this case, the molar ratio of oxyethylene/oxypropylene may preferably range from 2/1 to 10/1, with from 2/1 to 8/1 being particularly preferred.

The deinking agent composition according to the present invention includes from 75 to 95 wt% of the compound represented by the formula (2) and from 25 to 5 wt% of water. A water content greater than 25 wt% involves a potential problem that gelling may take place, leading to an extreme reduction in handling. A water content smaller than 5 wt%, on the other hand, may result in a composition having flammability, thereby possibly requiring an utmost attention to its handling such as shipping, storage and at-site handling.

Further, the deinking agent composition according to the present invention has a pH of from 4 to 9. A pH outside this range may allow a hydrolytic reaction to proceed, thereby highly possibly deteriorating the color tone, the smell and the like, and also possibly reducing the deinking performance. More preferably, the pH can range from 5 to 8, with a range of from 6 to 7 being still more preferred.

The present invention has made it possible to exhibit good deinking performance and to improve handling and stability over days by mixing the compound represented by the formula (2) and water in the above-mentioned, predetermined proportions and controlling the pH of the composition to from 4 to 9 as described above.

No particular limitation is imposed on the specific examples of fatty acids usable as raw materials for the above-described compounds represented by the formula (1) and formula (2), respectively. They can be fatty acids or fatty acid alkyl esters derived from natural oils or fats which are in turn available from animal oils such as lard oil and beef tallow, vegetable oils such as olive oil, palm oil, soybean oil, rapeseed oil, linseed oil an coconut oil, and fish oils; or synthetic fatty acids or fatty acid alkyl esters.

It is to be noted that the above-described fatty acids and fatty acid alkyl esters can be used either singly or as a mixture of two or more of the acids and esters.

No particular limitations are imposed on the processes and conditions for the production of the compound represented by the formula (1) and the compound represented by the formula (2), and known operation procedure and reaction conditions can be used.

The production of a compound in which $R^2$ and $R^4$ is a hydrogen atom, for example, can be conducted under conditions for a general addition reaction of an alkylene oxide to a compound having an active hydrogen atom. The production of a compound in which $R^2$ and $R^4$ has from 1 to 6 carbon atoms can be conducted by adequately choosing the process disclosed in Japanese Patent Laid-open No. Hei 6-57667 in which an alkylene oxide is directly inserted into a fatty acid alkyl ester in the presence of a metal catalyst, a process in which terminal hydroxyl groups of an alkylene oxide adduct of a fatty acid are alkylated with an alkyl chloride or the like, a process in which an alkylene oxide is added to a lower alcohol and the resulting adduct is then esterified with a higher fatty acid, or a like process.

The deinking agent or deinking agent composition according to the present invention can be preferably used by adding it in one of a wastepaper defibering step or an aging step or adding it in portions in both of the steps. Its amount to be added may preferably be from 0.1 to 3.0 wt% (in terms of the deinking agent component in the case of the composition) based on the wastepaper as a raw material. In the wastepaper defibering step, an alkaline agent such as sodium hydroxide, sodium silicate or sodium carbonate and/or a bleaching agent such as hydrogen peroxide can also be used in combination with the deinking agent or deinking agent composition according to the present invention as needed.

The above-described deinking agent or deinking agent composition according to the present invention can also be used in combination with one or more of known deinking agents, for example, higher alcohol sulfate salts, alkylbenzenesulfonates, and ethylene oxide adducts of higher alcohols or alkylphenols. To an extent capable of achieving the objects of the present invention, it is also possible to use one or more of anionic surfactants, cationic surfactants, amphoteric surfactants, nonionic surfactants, enzymes, polymeric flocculants, and the like.

EXAMPLES

The present invention will hereinafter be described more specifically on the basis of examples and comparative examples. It should, however, be borne in mind that the present invention is not limited to the following examples.

Examples 1 to 5 and Comparative Examples 1 to 3

Using the deinking agents shown in Table 1, a biodegradability test and various assessments of deinking performance were conducted. Assessment methods were as follows:

[1] Biodegradability test

Following the MITI testing method (OECE Test Guideline 301C), the biodegradability test was conducted under the following conditions:

[Test conditions]

Concentration of sample: 30 to 100 ppm
Concentration of activated sludge: 30 to 100 ppm
Test temperature: 25° C
Test period: 28 days

[Assessment]

BOD (biochemical oxygen demand) was measured over days, and using the value of BOD and TOD (total oxygen demand), the degree of biodegradation was determined in accordance with the below-described formula. The results are shown in Table 2.

$$\text{Degree of biodegradation (\%)} = 100 \times (BOD/TOD)$$

○: equal to or greater than 60% degree of biodegradation
△: equal to or greater than 40% degree of biodegradation to less than 60% degree of biodegradation
✕: less than 40% degree of biodegradation

[2] Deinking performance

Printed wastepaper (offset printed wastepaper/leaflets = 7/3) as a raw material was cut into 3 cm $\times$ 3 cm, and then charged into a pulper (manufactured by Kumagai Riki Kogyo Co., Ltd.). Based on the weight of the wastepaper as the raw material, 1.5 wt% of caustic soda, 3.0 wt% of sodium silicate No. 3, 1.5 wt% of hydrogen peroxide (in terms of its effective component) and 0.3 wt% of the deinking agent shown in Table 1 were added.

Subsequently, warm water was added to adjust the concentration of pulp to 15 wt%, followed by defibering at 50°C for 15 minutes. After the resulting pulp slurry was concentrated to 20 wt%, soaking was conducted at 50°C for 180 minutes. Warm water was then added to lower the pulp concentration to 1 wt%, at which flotation treatment was conducted at 40°C for 5 minutes.

The pulp slurry was diluted to 0.3 wt%, and then dewatered by gravity through a screen of 80 mesh. Paper sheeting was conducted by a TAPPI standard sheet machine (manufactured by Toyo Seiki Seisaku-sho, Ltd.). The brightness of the thus-obtained sheet was measured by a spectral color-difference meter (manufactured by Nippon Denshoku Industries Co., Ltd.), and the residual ink area ratio was determined by an image analyzer (manufactured by NIRECO Corporation). The results are shown in Table 2.

The operability (amount of froth) during flotation was assessed in accordance with the following standards:

A: Good operability.

B: Froth is a little excessive, but there is no problem in operability.

C: Froth is a little insufficient, but there is no problem in operability.

D: Froth is so much that the operation is difficult.

E: Froth is so little that the operation is difficult.

Table 1

|  | Deinking agent | Average molecular weight |
|---|---|---|
| Example 1 | $C_{17}H_{33}COO(12EO/2PO)CH_3$ | 939 |
| Example 2 | $C_{17}H_{33}COO(12EO/2PO)C_2H_5$ | 836 |
| Example 3 | $C_{17}H_{33}COO(10EO/2PO)H$ | 850 |
| Example 4 | $C_{21}H_{43}COO(8EO/3PO)H$ | 860 |
| Example 5 | Palm oil methyl ester (12EO/2PO) | 942 |
| Comparative Example 1 | Palm oil/glycerol (30EO/10PO) | 2,340 |
| Comparative Example 2 | $C_{17}H_{35}COO(10PO)(70EO)(30PO)H$ | 5,660 |
| Comparative Example 3 | $C_{18}H_{37}O(4PO)(30EO)(25PO)H$ | 2,390 |

In Table 1, EO represents ethylene oxide groups, and PO represents propylene oxide groups. The description of (EO)(PO) indicates that ethylene oxide groups and propylene oxide groups are bonded together as blocks in this order, and the description of (EO/PO) designates that ethylene oxide groups and propylene oxide groups are bonded together at random.

The average molecular weights in Examples 1 to 5 and Comparative Examples 1 and 2 are values calculated from the values of the corresponding saponification value measurements, and the average molecular weight in Comparative Example 3 is a value calculated from the value of the corresponding OHV measurement.

The deinking agent of Comparative Example 1 was a compound obtained by adding 30 moles of EO and 10 moles of PO at random to 1 mole of a mixture of palm oil and glycerol (palm oil/glycerol = 1/1 by molar ratio).

Table 2

|  | Degree of biodegradation | Brightness (%) | Residual ink area ratio (%) | Operability |
|---|---|---|---|---|
| Example 1 | ○ | 57.0 | 0.202 | A |
| Example 2 | ○ | 57.5 | 0.188 | A |
| Example 3 | ○ | 55.8 | 0.193 | C |
| Example 4 | ○ | 55.5 | 0.210 | C |
| Example 5 | ○ | 57.1 | 0.204 | A |
| Comparative Example 1 | × | 54.5 | 0.215 | B |
| Comparative Example 2 | × | 55.2 | 0.208 | C |
| Comparative Example 3 | × | 56.0 | 0.202 | A |

As shown in Table 2, the deinking agents of Examples 1 to 5 have been found to be excellent in brightness, residual ink area ratio and operability and further to be far superior in biodegradability to the deinking agents of the comparative examples owing to their small average molecular weights.

Examples 6 to 14

The deinking agents (90 parts by weight) shown in Table 3 were separately mixed with aliquots (10 parts by weight) of water to prepare deinking agent compositions of pH 7.

With respect to each of the thus-obtained deinking agent compositions, various assessments of deinking performance were conducted in a similar manner as in Example 1 except that the deinking agent composition was added to wastepaper as a raw material to give a concentration of 0.3 wt% based on the weight of the waste paper as the raw material. The results are shown in Table 4.

Table 3

|  | Deinking agent |
|---|---|
| Example 6 | $C_{17}H_{33}COO(10EO)CH_3$ |
| Example 7 | $C_{17}H_{33}COO(12EO/2PO)CH_3$ |
| Example 8 | $C_{17}H_{33}COO(12EO)CH_3$ |
| Example 9 | $C_{17}H_{33}COO(12EO/2PO)C_2H_5$ |
| Example 10 | $C_{17}H_{33}COO(10EO/2PO)H$ |
| Example 11 | $C_{17}H_{33}COO(15EO)CH_3$ |
| Example 12 | $C_{21}H_{43}COO(8EO/3PO)H$ |
| Example 13 | Palm oil methyl ester (12EO/2PO) |
| Example 14 | Soybean oil methyl ester (8EO) |

In Table 3, EO represents ethylene oxide groups, and PO represents propylene oxide groups. The description of (EO/PO) designates that ethylene oxide groups and propylene oxide groups are bonded together at random.

Table 4

|  | Brightness (%) | Residual ink area ratio (%) | Operability Operability |
|---|---|---|---|
| Example 6 | 56.9 | 0.195 | A |
| Example 7 | 57.0 | 0.202 | A |
| Example 8 | 57.1 | 0.190 | B |
| Example 9 | 57.5 | 0.188 | A |
| Example 10 | 55.8 | 0.193 | C |
| Example 11 | 58.2 | 0.185 | B |
| Example 12 | 55.5 | 0.210 | C |
| Example 13 | 57.1 | 0.204 | A |
| Example 14 | 54.6 | 0.188 | C |

Examples 15 to 21 and Comparative Examples 4 to 6

The deinking agents shown in Table 5 were separately mixed with aliquots of water at ratios shown in Table 5 to prepare deinking agent compositions of pH 7, respectively.

With respect to each of the thus-prepared deinking agent compositions, its stability over days after having left over at pH 7 and 5°C for 1 month was confirmed, and was then assessed in accordance with the below-describe standards. The results are also shown in Table 5.

○: Remained as a homogeneous solution at 5°C and showed flowability.

△: Partially precipitated and solidified at 5°C.

×: Completely solidified at 5°C, or gelled at room temperature.

Table 5

| | Deinking agent | Mixing ratio of deinking agent to water (parts by weight of deinking agent /parts by weight of water) | Stability over days |
|---|---|---|---|
| Example 15 | $C_{17}H_{33}COO(10EO)CH_3$ | 80/20 | ○ |
| Example 16 | $C_{17}H_{33}COO(12EO/2PO)CH_3$ | 90/10 | ○ |
| Example 17 | $C_{17}H_{33}COO(12EO)CH_3$ | 75/25 | ○ |
| Example 18 | $C_{17}H_{33}COO(12EO/2PO)C_2H_5$ | 95/5 | △ |
| Example 19 | $C_{17}H_{33}COO(10EO/2PO)H$ | 80/20 | ○ |
| Example 20 | Palm oil methyl ester (12EO/2PO) | 85/15 | △ |
| Example 21 | Soybean oil methyl ester (8EO) | 90/10 | ○ |
| Comparative Example 4 | $C_{17}H_{33}COO(10EO)CH_3$ | 60/40 | × |
| Comparative Example 5 | $C_{17}H_{33}COO(12EO/2PO)CH_3$ | 60/40 | × |
| Comparative Example 6 | $C_{17}H_{33}COO(15EO)CH_3$ | 50/50 | × |

As shown in Table 5, the deinking agent compositions of Examples 15 to 21 have been found to be far superior in stability over days to the composition of the comparative examples as their deinking/water ratios were within the range specified in the present invention.

**Claims**

1.  A deinking agent comprising a compound having:

aliphatic hydrocarbon groups having from 7 to 23 carbon atoms;
oxyethylene groups; and
oxypropylene groups and/or oxybutylene groups;

wherein the deinking agent having a degree of biodegradation of 60% or more, and an average molecular weight of 1,500 or less.

2.  The deinking agent according to claim 1, wherein a number of moles of the oxyethylene groups is equal to or greater than a total number of moles of the oxypropylene groups and oxybutylene groups.

3.  The deinking agent according to claim 1 or 2, wherein the compound is represented by the following formula (1):

$$R^1COO(AO)_nR^2 \qquad (1)$$

wherein $R^1$ represents an alkyl group or alkenyl group having from 7 to 21 carbon atoms, $R^2$ represents a hydrogen atom or an alkyl group or alkenyl group having from 1 to 6 carbon atoms, AO represents an oxyalkylene group having from 2 to 4 carbon atoms, n stands for from 3 to 20, and the oxyalkylene group comprises oxyethylene group and oxypropylene group and/or oxybutylene group.

4.  A deinking agent composition comprising from 75 to 95 wt% of a compound represented by the following formula (2) and from 5 to 25 wt% of water, and having a pH of from 4 to 9:

$$R^3COO(BO)_mR^4 \qquad (2)$$

wherein $R^3$ represents an alkyl group or alkenyl group having from 7 to 21 carbon atoms, $R^4$ represents a hydrogen atom or an alkyl group or alkenyl group having from 1 to 6 carbon atoms, BO represents an oxyalkylene group having from 2 to 4 carbon atoms, and m stands for from 3 to 20.

<div align="center">**INTERNATIONAL SEARCH REPORT**</div>

| | International application No. |
|---|---|
| | PCT/JP2004/004531 |

| A. CLASSIFICATION OF SUBJECT MATTER |
|---|
| Int.Cl$^7$ D21C5/02 |

According to International Patent Classification (IPC) or to both national classification and IPC

| B. FIELDS SEARCHED |
|---|
| Minimum documentation searched (classification system followed by classification symbols) |
| Int.Cl$^7$ D21C5/02 |

Documentation searched other than minimum documentation to the extent that such documents are included in the fields searched

| Jitsuyo Shinan Koho | 1926–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 59-130400 A (Kao Soap Co., Ltd.), 26 July, 1984 (26.07.84), Page 3, table 1; page 4, table 2 & DE 3401444 A | 1–4 |
| X | JP 63-182489 A (NOF Corp.), 27 July, 1988 (27.07.88), Claims; page 4, table 1 (Family: none) | 1–4 |
| X | JP 6-49790 A (Kao Corp.), 22 February, 1994 (22.02.94), Claims; page 5, table 1 (Family: none) | 1–4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 June, 2004 (28.06.04) | 13 July, 2004 (13.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

<table>
<tr><td colspan="2" align="center">**INTERNATIONAL SEARCH REPORT**</td><td>International application No.<br>PCT/JP2004/004531</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| X | JP 5-71086 A (Nisshin Kagaku Kenkyusho Co., Ltd.),<br>23 March, 1993 (23.03.93),<br>Claims; page 4, table 1<br>& US 5223089 A & KR 9607320 B | 4 |
| A | JP 1-11756 A (Asahi Denka Kogyo Kabushiki Kaisha),<br>27 February, 1989 (27.02.89),<br>Claims; page 5, table 1<br>(Family: none) | 1-4 |

Form PCT/ISA/210 (continuation of second sheet) (January 2004)